# EUROPÄISCHE PATENTSCHRIFT

(11) **EP 1 056 625 B1**
(45) Veröffentlichungstag und Bekanntmachung des Hinweises auf die Patenterteilung: **29.05.2002**
(21) Anmeldenummer: 99913185.7
(22) Anmeldetag: 23.02.1999
(51) Int. Cl.: B60S 1/04

(54) **ANTRIEBSVORRICHTUNG FÜR SCHEIBENWISCHER**
DRIVE DEVICE FOR WINDSHIELD WIPERS
DISPOSITIF D'ENTRAINEMENT POUR ESSUIE-GLACE

(30) Priorität: 27.02.1998 DE 19808441
(43) Veröffentlichungstag der Anmeldung: 06.12.2000
(73) Patentinhaber: FIRMA SANDER KG GmbH & Co., D-77871 Renchen-Ulm (DE)
(72) Erfinder: ZEIBIG, Uwe, D-77855 Achern (DE)
(74) Vertreter: Patent- und Rechtsanwaltssozietät, Maucher, Börjes & Kollegen
(86) Internationale Anmeldenummer: EP9901174
(87) Internationale Veröffentlichungsnummer: WO9943520

(56) Entgegenhaltungen:
- EP-A- 0 779 190
- DE-A- 19 546 907
- DE-A- 19 636 871

## Beschreibung

Die Erfindung betrifft eine Antriebsvorrichtung für Scheibenwischer, insbesondere Kraftfahrzeug-Scheibenwischer, mit einem Antriebsmotor, einem als Hebelgetriebe dienenden Übertragungsgestänge und einem Trägerrohr, welches an seinen beiden Enden jeweils über eine fixierte Steckverbindung eine Halterung mit Lagerhülse für eine quer zur Längserstreckung des Trägerrohres angeordnete Welle oder Achse eines Scheibenwischerarmes trägt, wobei die Halterung einerseits die Lagerhülse zur Aufnahme der Welle oder Achse und andererseits ein Anschlußstück zum Verbinden mit dem Trägerrohr aufweist, wobei das Anschlußstück als mit seiner Mittelachse quer zum Verlauf und zur Achse der Lagerhülse angeordneter Kupplungsstutzen zum Zusammenstecken und Verbinden mit dem Trägerrohr ausgebildet ist.

Eine derartige Antriebsvorrichtung für zwei Scheibenwischer ist aus DE 195 39 972 A1 bekannt. Die mit dem Trägerrohr über eine Steckverbindung kuppelbaren Halterungen sind dabei in der Regel teure Spritzgußteile, die außerdem noch eine Verpressung des Trägerrohres mit ihrem Steckteil erforderlich machen.

Aus DE 44 09 957 A1 ist schon eine Antriebsvorrichtung für Scheibenwischer bekannt, bei der kein Trägerrohr, sondern ein balkenförmiger Träger aus einem Blechteil vorgesehen ist, an dessen Ende die Halterung einstückig oder über eine Laschenverbindung befestigt sein kann. Die Halterung ist dabei aus Blech geprägt.

Da ein Träger einer Antriebsvorrichtung für Scheibenwischer vor allem unter winterlichen Witterungsbedingungen hohe Kräfte aufnehmen muß, benötigt er eine entsprechende Abmessung, die besonders groß ausfällt, wenn er nicht als Rohr gestaltet ist. Die aus DE 44 09 957 A1 bekannte Lösung ergibt deshalb auch einen entsprechend breiten Träger und eine entsprechend breite und platzaufwendige Anschlußlasche, wenn die Halterung nicht in einem Stück mit dem Träger gefertigt ist. Aber auch bei einstückiger Ausbildung ergibt sich ein entsprechend großer Platzbedarf. Darüber hinaus ergibt sich eine entsprechend aufwendige Fertigung.

Aus DE-GM 88 12 550.5 ist eine Trägervorrichtung für Kraftfahrzeugscheibenwischer mit zwei Wischerarmen, also für eine eingangs genannte Antriebsvorrichtung bekannt, bei welcher die Lagerhülsen zur Aufnahme der Wellen oder Achsen als Buchsen ausgebildet sind, die an einem Trägerrohr angeschweißt werden, das im Bereich seiner endseitigen Befestigung gequetscht ist und Öffnungen für Befestigungsschrauben zum Verbinden mit der Karosserie aufweist. In diesem Falle ist das Trägerrohr also im wesentlichen einstückig mit seiner Befestigungsvorrichtung verbunden und in einem zusätzlichen Arbeitsgang müssen die Lagerhülsen angeschweißt werden, was nicht nur eine Berücksichtigung der beim Schweißen auftretenden Wärmespannungen verlangt, sondern auch eine hohe Genauigkeit erfordert, damit diese Lagerhülsen ihre Lagerfunktion ausüben können.

Der Erfindung liegt deshalb die Aufgabe zugrunde, eine Antriebsvorrichtung für Scheibenwischer, zwei Scheibenwischer, der eingangs genannten Art zu schaffen, bei welcher der Vorteil der Verwendung eines Trägerrohres erhalten bleibt und die Verbindung zwischen Trägerrohr und Halterung einfach, platzsparend und vor allem in der Lage ist, hohe Kräfte zu übertragen. Dennoch soll die Herstellung insbesondere auch der Halterung preiswert sein. Gleichzeitig soll die Krafteinleitung von dem Trägerrohr in die Halterung beziehungsweise umgekehrt im Verlauf der Lagerhülse erfolgen.

Zur Lösung dieser Aufgabe ist die eingangs genannte Antriebsvorrichtung für Scheibenwischer dadurch gekennzeichnet, daß die Halterung ein aus Blech tiefgezogenes Teil ist, daß die Lagerhülse über die Ebene des tiefgezogenen Blechteiles beidseits übersteht und an einem Ende eine Umstülpung des sie bildenden Bleches in dem Sinne aufweist, daß der Endbereich der Lagerhülse außenseitig von einem einstückig mit ihr verbundenen hülsenförmigen Außenring umschlossen ist und der Übergang von der Lagerhülse zu diesem Außenring im Längsschnitt eine Umbiegung um etwa 180° ist, und daß das Anschlußstück mit dem durch die Umstülpung gebildeten Außenring einstückig verbunden ist.

Es wird also eine preiswert aus Blech im Tiefziehverfahren herstellbare Halterung vorgesehen, bei welcher durch eine Umstülpung nicht nur eine große Stabilität der Lagerhülse sondern auch die Verbindung mit dem Anschlußstück in einen Bereich relativ zu der Lagerhülse gelangt, der zwischen deren Enden, zum Beispiel etwa im mittleren Bereich der Gesamtlänge dieser Lagerhülse liegen kann. Somit können die von dem Trägerrohr ausgehenden oder aufzunehmenden Kräfte über den mittleren Bereich der Lagerhülse und damit auch der von dieser gehaltenen Welle oder Achse eingeleitet werden. Gleichzeitig ergibt sich eine, wie bereits erwähnt, preiswerte, zusätzlich wenig platzaufwendige Kupplung mit dem Trägerrohr, die weiterhin die Verwendung eines derartigen Trägerrohres beliebiger Form und Herstellung ermöglicht, so daß dieses eine hohe Steifigkeit mit einem möglichst geringen Platzaufwand verbinden kann.

Besonders zweckmäßig ist es, wenn der über die Umstülpung mit der Lagerhülse verbundene Außenring eine axiale Erstreckung hat, durch die das als Kupplungsstutzen ausgebildete Anschlußstück etwa im mittleren Bereich der Lagerhülse quer zu dieser abstehend angeordnet ist. Zwar ist in jedem Falle durch die Umstülpung der Kupplungsstutzen im Bereich zwischen den Enden der Lagerhülse anbringbar, jedoch ist es besonders günstig, wenn dies im mittleren Bereich der Lagerhülse geschieht, wodurch die Kräfte zwischen Trägerrohr und Lagerhülse bzw. von dieser aufgenommener Welle oder Achse gut eingeleitet werden können, ohne erhebliche Biege- oder Torsionskräfte zu verursachen.

Das als Kupplungsstutzen ausgebildete Anschlußstück kann aus wenigstens einer Blechzunge gebogen sein, insbesondere aus zwei vorzugsweise gleich großen, mit ihren Enden in Gebrauchsstellung einander zugewandten gebogenen Halbschalen bestehen, wobei am Ende der gebogenen Blechzunge(n) ein etwa parallel zur Mittelachse des Kupplungsstutzens verlaufender Schlitzoffengelassen sein kann. Es könnte also entweder eine relativ große Blechzunge weitgehend mit einem etwa kreisförmigen Querschnitt gebogen werden, wobei dann der offene Schlitz nahe ihrer Ausgangsstellung zu liegen käme, oder bevorzugt könnten zwei etwa gleich große Blechzungen zu Halbschalen gebogen werden, so daß dann der zwischen ihnen freibleibende Schlitz oder die dort entstehende Fuge der Ausgangsstelle dieser beiden Blechzungen etwa gegenüberliegt. Der Schlitz hat dabei den Vorteil, diesem Kupplungsstutzen eine gewisse radiale Flexibilität und Elastizität zu geben, die beim Zusammenstecken mit dem Trägerrohr zu einer reibschlüssigen Verbindung oder wenigstens zu einer reibschlüssigen Vormontagestellung führt, wonach dann anschließend noch ein Verschweißen oder auch gleichzeitig mit dem Aufstecken ein Verkleben oder dergleichen gegenseitige Befestigung erfolgen kann.

Besonders günstig ist es, wenn der an dem Kupplungsstutzen offene Schlitz auf der der Umstülpung fernen Seite des Kupplungsstutzens insbesondere achsparallel verläuft und vorzugsweise beim Einstecken in das Trägerrohr eine im Inneren dieses Trägerrohres befindliche innenliegende Schweißnaht aufnimmt. Derartige Trägerrohre sind oft geschweißt, wobei dann im Inneren dieses Rohres die Schweißnaht stehenbleibt. Bei entsprechender Gestaltung der Abmessungen der Blechzungen zur Bildung des Kupplungsstutzens und in einem solchen Falle, in welchem dieser Kupplungsstutzen in das Innere des Trägerrohres eingesteckt wird, kann die bei der Fertigung dieses Kupplungsstutzens von selbst entstehende Lücke zwischen deren beiden einander zugewandten Enden also in sinnvoller Weise dazu ausgenutzt werden, das Zusammenstecken trotz der innenliegenden Schweißnaht in dem Trägerrohr zu ermöglichen. Die Schlitzweite muß nur so gewählt werden, daß auch bei einer elastischen Zusammendrückung des Kupplungsstutzens beim Einführen in das Trägerrohr der Abstand groß genug bleibt, um die Schweißnaht aufnehmen zu können. Dabei ergibt sich in vorteilhafter Weise auch gleichzeitig eine drehfeste Kupplung.

Die das Anschlußstück bildenden Blechzungen können sich im Bereich der Lagerhülse als U-förmige Schenkel fortsetzen, die einerseits mit der Umstülpung bzw. dem Außenring verbunden sind und insbesondere andererseits an der Lagerhülse außenseitig mit Abstand vorbeiführen und eine Befestigungsstelle bilden oder eine Befestigungslasche einstückig zwischen sich aufweisen. In vielen Fällen hat die mit dem Trägerrohr zu verbindende jeweilige Halterung eine solche Befestigungsstelle oder Befestigungslasche, womit die gesamte Antriebsvorrichtung verankert werden kann. Diese kann also in zweckmäßiger Weise ebenfalls in einem Stück aus Blech geformt werden, wobei die den Kupplungsstutzen bildenden Blechzungen in zweckmäßiger Weise als U-Schenkel bis zu dieser Befestigungslasche geführt sind und diese und damit die gesamte Halterung aussteifen, so daß entsprechend hohe Befestigungskräfte übertragen werden können.

Die Steifigkeit der Halterung kann dabei auch im Bereich einer Befestigungslasche dadurch gesteigert sein, daß die die Befestigungslasche umgrenzenden U-Schenkel an deren Ende einstückig zusammengeführt und miteinander verbunden sind, also ineinanderübergehen und sich ununterbrochen fortsetzen.

Für eine möglichst direkt Übertragung von Kräften zwischen Trägerrohr und mittlerem Bereich der Lagerhülse ist es günstig, wenn die Umstülpung mit einem derart engen Biegeradius geformt ist, daß der außenseitig an der Lagerhülse befindliche Außenring von der Lagerhülse keinen oder nur einen geringen Abstand hat. Bei einem relativ großen Abstand einer Umstülpung könnten sich bei in Richtung des Trägerrohres und quer zu der Lagerhülse auftretenden Kräften zunächst elastische Verformungen ergeben, während durch die vorerwähnte Maßnahme ein solches elastisches Halten des Anschlusses des Trägerrohres an die Halterung vermieden werden kann.

Für eine direkte Krafteinleitung besonders günstig ist es, wenn der Außenring die Lagerhülse zumindest an seinem der Umstülpung abgewandten Endbereich berührt, gegebenenfalls dort mit der Lagerhülse fest verbunden ist und/oder wenigstens eine gegen die Lagerhülse gerichtete und an ihr anliegende Sicke aufweist, die dabei am gesamten Umfang umlaufen könnte, in erster Linie aber auf der dem Trägerrohr zugewandten Seite vorhanden sein sollte.

Da der Kupplungsstutzen an dem von der Umstülpung abgewandten Rand des Außenringes angeschlossen ist, werden auf diese Weise von ihm ausgehende oder auf ihn zu übertragende Kräfte direkt an dieser Berührungsstelle aufgenommen oder übertragen, so daß kein Umweg des Kraftflusses über die Umstülpung selbst erfolgt. Entsprechend stabil und biegesteif ist die Halterung und damit die gesamte Tragkonstruktion dieser Antriebsvorrichtung mit ihrem Trägerrohr und den Halterungen sowie den in der Regel daran befindlichen Befestigungslaschen.

Eine konstruktiv und herstellungstechnisch günstige und gleichzeitig steife Ausbildung der Halterung ergibt sich, wenn sich an den Außenring an seinem der Umstülpung abgewandten Rand ein etwa napfförmiger Anschlußübergang Ring mit einem Abstand zu der Lagerhülse einstückig anschließt, der sich in den Kupplungstutzen und/oder die Befestigungslasche fortsetzt. Dieser Anschlußübergang ermöglicht auch das Anordnen und Anbringen der schon erwähnten U-Schenkel, durch welche die aus Blech gefertige Halterung und der Kupplungsstutzen ausgesteift werden.

Der durch die Umstülpung an der Lagerhülse gebildete Außenring kann als Einsteckteil zum Einstecken in eine Lageröffnung einer Karosserie dienen und außenseitig insbesondere zylindrisch sein. Somit ermöglicht die Umstülpung die Anbringung eines Steckbereiches an der Lagerhülse und erlaubt es, die gesamte Antriebsvorrichtung noch besser an der Karosserie eines Kraftfahrzeuges zu lagern, zu haltern und auch zu positionieren, wobei durch diese Maßnahme die gesamte Antriebsvorrichtung auch näher an die mit den Scheibenwischern zu bearbeitende Scheibe herangebracht werden kann, nämlich um die axiale Länge des umgestülpten, den Steckbereich bildenden Außenring. Dies hat gleichzeitig den Vorteil, daß in dem Bereich unterhalb der mit den Scheibenwischern zu bestückenden Scheibe weniger Platz vor dieser Scheibe benötigt wird, wo häufig noch Lüftungseintritte oder dergleichen untergebracht werden müssen. Dabei hat die erfindungsgemäße Umstülpung den erheblichen Vorteil, daß sie eine Anpassung an die Platzverhältnisse bei unterschiedlichen Kraftfahrzeugtypen dadurch ermöglicht, daß sie größer oder kleiner, also mit einer größeren oder kleineren axialen Abmessung des Außenringes gewählt und gefertigt werden kann, um auf diese Weise den Abstand der Antriebsvorrichtung vor der jeweiligen Scheibe vorzuwählen oder vorherzubestimmen. Dennoch wird die Welle oder Achse für die Wischerarme zumindest über den größten Teil ihrer Länge von der aus Blech bestehenden Lagerhülse umfaßt, so daß auch die Lagerstellen innerhalb der Lagerhülse einen größtmöglichen Abstand zueinander haben können und ein großer Überstand der Welle oder Achse vermieden werden kann.

Der der Umstülpung abgewandte, radial nach außen umgebogene Anschlußübergang des Außenringes kann einen axialen Anschlag beim Einsetzen in eine Karosserieöffnung oder dergleichen bilden und die Einstecktiefe begrenzen. Dieser insgesamt etwa napfförmige Anschlußübergang stellt somit nicht nur die Verbindung zwischen Außenring und Anschlußstück oder Kupplungsstutzen einer seits sowie Befestigungslasche andererseits dar, sondern hat eine zusätzliche Funktion als die Einstecktiefe in eine Karosserie begrenzender Anschlag.

Der an dem Außenring einstückig angreifende oder angeschlossene Anschlag kann dabei über eine ringförmig angeordnete Biegung um etwa 90° mit dem Außenring einstückig verbunden sein und dieser Anschlag kann seinerseits über eine weitere Biegung um etwa 90° - gegebenenfalls auch insbesondere weniger - in den napfförmigen Anschlußübergang zur Halterung des Kupplungsstutzens und/oder der Befestigungslasche fortgesetzt sein. Dies führt insgesamt zu einer mit einem Trägerrohr kuppelbaren Halterung, die einstückig aus Blech besteht, dabei aber eine hohe Stabilität und Steifigkeit ergibt und eine platzsparende Anordnung und Befestigung erlaubt, so daß bei der Steifigkeit und der Festigkeit keinerlei Abstriche gemacht werden müssen, trotzdem aber dieses Blechteil preiswert gefertigt und einfach montiert werden kann.

Nachstehend ist ein Ausführungsbeispiel der Erfindung anhand der Zeichnung näher beschrieben. Es zeigt in schematisierter Darstellung:
- Fig.1: einen Längsschnitt einer Halterung, die mittels eines einen Kupplungsstutzen bildenden Formanschlußstückes mit einem Trägerrohr einer Antriebsvorrichtung für Scheibenwischer verbunden ist, wobei über eine Umstülpung dieser Kupplungsstutzen etwa auf der Höhe des mittleren Bereiches einer Lagerhülse zur Aufnahme einer Welle oder Achse eines Scheibenwischerarmes angeordnet ist,
- Fig.2: eine Draufsicht der Halterung gemäß Fig.1 ohne das Trägerrohr und ohne die sonstigen zu der Antriebsvorrichtung für Scheibenwischer gehörenden Teile sowie
- Fig.3: einen Querschnitt der Halterung im Bereich der Lagerhülse gemäß der Schnittlinie III-III in Fig.1.

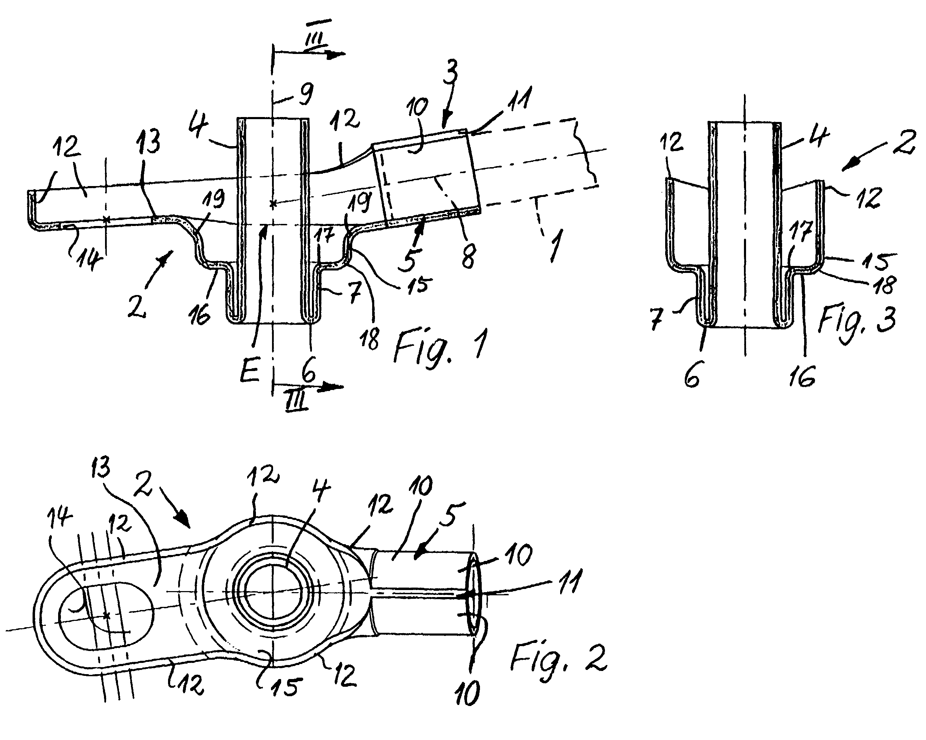

Von einer Antriebsvorrichtung für Scheibenwischer, insbesondere Kraftfahrzeug-Scheibenwischer ist in Fig.1 nur ein Ende eines Trägerrohres 1 und vor allem eine damit kuppelbare Halterung 2 dargestellt.

Nicht näher dargestellt sind der Antriebsmotor, ein als Hebelgetriebe dienendes Übertragungsgestänge und das andere Ende des Trägerrohres 1 mit einer spiegelsymmetrisch angeordneten Halterung 2, weil es sich dabei um übliche und bekannte Teile und Anordnungen handelt.

Die Halterung 2 ist mit dem Trägerrohr 1 über eine fixierte Steckverbindung 3 verbunden und weist eine Lagerhülse 4 für eine nicht näher dargestellte übliche, quer zur Längserstreckung des Trägerrohres 1 angeordnete Welle oder Achse eines Scheibenwischerarmes auf. Außerdem weist die Halterung 2 ein noch näher zu beschreibendes Anschlußstück 5 zum Verbinden mit dem Trägerrohr 1 auf, womit die Steckverbindung 3 hergestellt werden kann.

Aus den Figuren und insbesondere Fig.1 und 3 ergibt sich deutlich, daß die Halterung 2 ein aus Blech tiefgezogenes Teil ist, also aus preiswertem Werkstoff hergestellt werden kann, trotzdem aber eine hohe Stabilität, Steifigkeit und auch Präzision hat. Dies wird vor allem auch dadurch erreicht, daß die Lagerhülse 4 über die in Fig.1 angedeutete Ebene E des tiefgezogenen Blechteiles, also etwa die Ausgangslage des noch nicht tiefgezogenen Bleches, beidseits übersteht und an einem Ende eine Umstülpung 6 des sie bildenden Bleches in dem Sinne aufweist, daß dieser Endbereich der Lagerhülse 4 außenseitig von einem einstückig mit ihr verbundenen, ebenfalls hülsenförmigen Außenring 7 umschlossen ist. Man erkennt dies deutlich sowohl in Fig.1 als auch in Fig.3, wobei der besseren Deutlichkeit wegen zwischen der Lagerhülse 4 und diesem Außenring 7 ein Spalt freigelassen ist, der aber in Wirklichkeit ganz oder mindestens bereichsweise vermieden wird, um die Lagerhülse 4 in diesem Bereich doppelwandig zu machen und beim Auftreten von Querkräften elastische Relativbewegungen zu vermeiden.

Der Übergang von der Lagerhülse 4 zu dem Außenring 7 ist im Längsschnitt eine Umbiegung um etwa 180°. Das Anschlußstück 5 ist mit diesem durch die Umstülpung 6 gebildeten Außenring 7 gemäß Fig.1 und 2 einstückig verbunden und als mit seiner Mittelachse 8 quer zum Verlauf und zur Achse 9 der Lagerhülse 4 angeordneter Kupplungstutzen zum Zusammenstecken und Verbinden mit dem Trägerrohr 1 ausgebildet, wobei von dem Trägerrohr 1 in Fig.1 der Endbereich mit unterbrochenen Linien angedeutet ist.

Der durch die Umstülpung 6 mit der Lagerhülse 4 verbundene Außenring 7 hat dabei eine axiale Erstreckung oder Abmessung, durch die der von diesem Außenring 7 ausgehende Kupplungsstutzen etwa im mittleren Bereich der Lagerhülse 4 quer zu dieser abstehend angeordnet ist. Die Mittelachse 8 des Kupplungstutzens oder Anschlußstückes 5 schneidet dabei die Mittelachse 9 der Lagerhülse 4 im Ausführungsbeispiel etwas oberhalb der axialen Mitte dieser Lagerhülse 4. Je nach Wahl der axialen Abmessung des Außenringes 7 kann dies variiert werden.

Das Anschlußstück 5, welches den Kupplungsstutzen bildet, ist im Ausführungsbeispiel aus zwei Blechzungen 10 gebogen, die dabei gleich groß sind und somit in Gebrauchsstellung einander zugewandte gebogene Halbschalen bilden, wobei am Ende dieser gebogenen Blechzungen 10 ein parallel zur Mittelachse 8 verlaufender Schlitz 11 offengelassen ist, der dem Anschlußstück 5 eine gewisse radiale Nachgiebigkeit - nach innen und nach außen - verleiht, so daß das Anschlußstück 5 in das Innere eines Trägerrohres 1 eingesteckt oder über das äußere eines solchen Trägerrohres 1 aufgesteckt werden könnte. Anhand der Fig.1 erkennt man, daß der an dem Kupplungsstutzen offene Schlitz 11 auf der der Umstülpung 6 fernen oder abgewandten Seite des Kupplungsstückes achsparallel verläuft und bei einem Einstecken in das Trägerrohr 1 eine im Inneren dieses Trägerrohres 1 befindliche innenliegende Schweißnaht aufnehmen könnte. Ebenso könnte er auch eine außenliegende Schweißnaht in sich aufnehmen, wenn er auf das äußere des Trägerrohres 1 aufgesteckt würde und dieses eine solche außenliegende Schweißnaht hätte. Es wäre also unter Umständen möglich, aufgrund der Gestaltung der Halterung 2 und ihres Anschlußstückes 5 bei einem Trägerrohr 1 auf das Abschleifen einer außenliegenden Schweißnaht zu verzichten.

Bei gleichzeitiger Betrachtung aller drei Figuren erkennt man, daß die den Kupplungsstutzen bildenden Blechzungen 10 sich im Bereich der Lagerhülse 4 als U-Schenkel 12 fortsetzen, die einerseits mit der Umstülpung 6 und dem Außenring 7 verbunden sind und andererseits gemäß Fig.1 und 2 an der Lagerhülse 4 außenseitig und mit Abstand vorbeiführen und auf der dem Anschlußstück 5 abgewandten Seite der Lagerhülse 4 eine Befestigungsstelle bilden, wobei sie im Ausführungsbeispiel zwischen sich einstückig eine Befestigungslasche 13 aufweisen, die eine entsprechende Befestigungslochung 14 enthält. Die U-Schenkel 12 umgrenzen diese Befestigungslasche 13 und sind einstückig zusammengeführt und miteinander verbunden, gehen also ineinander über. Somit ist an der Befestigungslasche 13 ein umlaufender hochstehender Schenkel oder Steg vorhanden, der diese zur Übertragung von Haltekräften wichtige Befestigungslasche 13 austeift und stabilisiert. Dabei tragen diese Schenkel 12 durch ihre einstückige Fortsetzung bis in das Anschlußstück 5 auch dazu bei, den Kraftfluß von dem Trägerrohr 1 zu der Befestigungslasche 13 und umgekehrt zu verbessern.

Die schon erwähnte und erläuterte Umstülpung 6 ist mit einem derart engen Biegeradius geformt, daß der außenseitig an der Lagerhülse 4 befindliche Außenring 7 von der Lagerhülse 4 entgegen der verdeutlichenden Darstellung in den Fig.1 und 3 keinen oder einen praktisch nicht merkbar geringen Abstand hat. Bei einem Kraftfluß von der Befestigungslasche 13 zu dem Anschlußstück 5 und umgekehrt wird auf diese Weise ein Umweg über den Außenring 7 und die Umstülpung 6 vermieden. Gegebenenfalls genügt es dabei, wenn der Außenring 7 die Lagerhülse 4 an seinem der Umstülpung 6 abgewandten Endbereich berührt oder sogar eventuell dort mit der Lagerhülse 4, zum Beispiel durch einen Schweißpunkt oder dergleichen, verbunden ist, wobei dies dadurch noch gefördert und unterstützt sein könnte, daß eine im Ausführungsbeispiel nicht vorgesehene, gegen die Lagerhülse 4 gerichtete und an ihr anliegende Sicke in den Außenring 7 eingeformt ist, die bevorzugt an seinem gesamten Umfang umlaufen könnte.

Vor allem in Fig.1 erkennt man, daß sich an den Außenring 7 an seinem der Umstülpung abgewandten Rand oder Ende ein etwa napfförmiger Anschlußübergang 15 mit einem Abstand zu der Lagerhülse 4 einstückig anschließt, der sich in den Kupplungsstutzen bzw. das Anschlußstück 5 einerseits und die Befestigungslasche 1 andererseits fortsetzt und darüber hinaus auch zumindest an einem Teilbereich seines Umfanges die Stege oder U-Schenkel 12 trägt. Der durch die Umstülpung 6 an der Lagerhülse 4 gebildete Außenring 7 kann nämlich als Einsteckteil zum Einstecken in eine Lageröffnung einer Karosserie eines Fahrzeuges dienen und ist außenseitig zylindrisch. Der der Umstülpung 6 abgewandte, radial nach außen umgebogene Anschlußübergang 15 bildet dabei einen axialen Anschlag 16, der beim Einsetzen in eine Karosserieöffnung oder dergleichen die Einstecktiefe der Halterung 2 begrenzt. Somit erhält dieser Anschlußübergang 15 eine mehrfach Funktion, weil er einerseits die Verbindung der Lagerhülse 4 - über deren Außenring 7 - mit dem Anschlußstück 5 und der Befestigungslasche 13 herstellt und andererseits die Einstecktiefe beim Einsetzen in eine Karosserieöffnung begrenzt.

Der an dem Außenring 7 einstückig angreifende Anschlag 16 ist dabei über eine ringförmig umlaufende Biegung 17 um etwa 90° mit dem Außenring 7 einstückig verbunden und der Anschlag 16 ist seinerseits über eine entgegengesetzte Biegung 18 wiederum um etwa 90° in den napfförmigen Anschlußübergang 15 zur Halterung des Kupplungsstutzens und der Befestigungslasche 13 fortgesetzt, wobei auch der Übergang von diesem Anschlußübergang 15 zu diesen weiteren Teilen eine entsprechende Biegung 19 ist. Diese Formung des die Halterung 2 bildenden Blechteiles erkennt man besonders gut in Fig.1.

Insgesamt ergibt sich eine Halterung 2 für eine Antriebsvorrichtung für Scheibenwischer, die aus einem einzigen Blechteil gefertigt sein kann und dennoch eine hohe Stabilität und einen günstigen Kraftfluß aufweist.

Eine Antriebsvorrichtung für Scheibenwischer hat üblicherweise einen Antriebsmotor, ein als Hebelgetriebe dienendes Übertragungsgestänge und das Trägerrohr 1, welches an seinen beiden Enden jeweils über eine feste Verbindung, sei sie eine Klemmverbindung, eine Schweißverbindung, eine Klebeverbindung oder dergleichen, eine Halterung 2 mit Lagerhülse 4 für eine quer zur Längserstreckung des Trägerrohres 1 angeordnete Welle oder Achse eines Scheibenwischerarmes trägt. Die Halterung 2 ist dabei ein aus Blech tiefgezogenes einstückiges Teil, bei welchem die Lagerhülse 4 über die Ebene E des tiefgezogenen Blechteiles beidseits übersteht, das heißt, die seitlich der Lagerhülse 4 befindlichen Teile, nämlich ein Anschlußstück 5 und eine Befestigungslasche 13 stehen etwa vom mittleren Bereich der Lagerhülse 4 beidseits ab. Dies wird dadurch erreicht, daß am Ende der Lagerhülse 4 eine Umstülpung 6 angeordnet ist, die in einen an der Außenseite der Lagerhülse 4 umlaufenden hülsenförmigen Außenring 7 übergeht, an welchen das Anschlußstück 5 einerseits und die Befestigungslasche 13 - sofern sie benötigt wird - andererseits angeformt sind.

## Patentansprüche

1. Antriebsvorrichtung für Scheibenwischer, insbesondere Kraftfahrzeug-Scheibenwischer, mit einem Antriebsmotor, einem als Hebelgetriebe dienenden Übertragungsgestänge und einem Trägerrohr (1), welches an seinen beiden Enden jeweils über eine fixierte Steckverbindung (3) eine Halterung (2) mit Lagerhülse (4) für eine quer zur Längserstreckung des Trägerrohres (1) angeordnete Welle oder Achse eines Scheibenwischerarmes trägt, wobei die Halterung (2) einerseits die Lagerhülse (4) zur Aufnahme der Welle oder Achse und andererseits ein Anschlußstück (5) zum Verbinden mit dem Trägerrohr (1) aufweist, wobei das Anschlußstück (5) als mit seiner Mittelachse (8) quer zum Verlauf und zur Achse (9) der Lagerhülse (4) angeordneter Kupplungsstutzen zum Zusammenstecken und Verbinden mit dem Trägerrohr (1) ausgebildet ist, **dadurch gekennzeichnet, daß** die Halterung (2) ein aus Blech tiefgezogenes Teil ist, daß die Lagerhülse (4) über die Ebene (E) des tiefgezogenen Blechteiles beidseits übersteht und an einem Ende eine Umstülpung (6) des sie bildenden Bleches in dem Sinne aufweist, daß der Endbereich der Lagerhülse (4) außenseitig von einem einstückig mit ihr verbundenen hülsenförmigen Außenring (7) umschlossen ist und der Übergang von der Lagerhülse (4) zu diesem Außenring (7) im Längsschnitt eine Umbiegung um etwa 180° ist und daß das Anschlußstück (5) mit dem durch die Umstülpung (6) gebildeten Außenring (7) einstückig verbunden ist.

2. Antriebsvorrichtung nach Anspruch 1, **dadurch gekennzeichnet, daß** der über die Umstülpung (6) mit der Lagerhülse (4) verbundene Außenring (7) eine axiale Erstreckung hat, durch die das als Kupplungsstutzen ausgebildete Anschlußstück (5) etwa im mittleren Bereich der Lagerhülse (4) quer zu dieser abstehend angeordnet ist.

3. Antriebsvorrichtung nach Anspruch 1 oder 2, **dadurch gekennzeichnet, daß** das als Kupplungsstutzen ausgebildete Anschlußstück (5) aus wenigstens einer Blechzunge (10) gebogen ist, insbesondere aus zwei vorzugsweise gleich großen, mit ihren Enden in Gebrauchsstellung einander zugewandten gebogenen Halbschalen besteht, wobei am Ende der gebogenen Blechzunge(n) (10) ein etwa parallel zur Mittelachse (8) des Kupplungstutzens verlaufender Schlitz (11) offengelassen ist.

4. Antriebsvorrichtung nach Anspruch 3, **dadurch gekennzeichnet, daß** der an dem Kupplungstutzen offene Schlitz (11) auf der der Umstülpung (6) fernen Seite des Kupplungsstutzen insbesondere achsparallel verläuft und vorzugsweise beim Einstecken in das Trägerrohr (1) eine im Inneren dieses Trägerrohres (1) befindliche innenliegende Schweißnaht aufnimmt.

5. Antriebsvorrichtung nach einem der Ansprüche 1 bis 4, **dadurch gekennzeichnet, daß** die das Anschlußstück (5) bildenden Blechzungen (10) sich im Bereich der Lagerhülse als U-Schenkel (12) fortsetzen, die einerseits mit der Umstülpung (6) bzw. dem Außenring (7) verbunden sind und insbesondere andererseits an der Lagerhülse (4) außenseitig mit Abstand vorbeiführen und eine Befestigungsstelle bilden oder eine Befestigungslasche (13) einstückig zwischen sich aufweisen.

6. Antriebsvorrichtung nach einem der Ansprüche 1 bis 5, **dadurch gekennzeichnet, daß** die die Befestigungslasche (13) umgrenzenden U-Schenkel (12) an deren Ende einstückig zusammengeführt und miteinander verbunden sind.

7. Antriebsvorrichtung nach einem der Ansprüche 1 bis 6, **dadurch gekennzeichnet, daß** die Umstülpung (6) mit einem derart engen Biegeradius geformt ist, daß der außenseitig an der Lagerhülse (4) befindliche Außenring (7) von der Lagerhülse (4) keinen oder nur einen geringen Abstand hat.

8. Antriebsvorrichtung nach einem der Ansprüche 1 bis 7, **dadurch gekennzeichnet, daß** der Außenring (7) die Lagerhülse (4) zumindest an seinem der Umstülpung (6) abgewandten Endbereich berührt, ggfs. dort mit der Lagerhülse (4) fest verbunden ist und/oder wenigstens eine gegen die Lagerhülse (4) gerichtete und an ihr anliegende Sicke aufweist.

9. Antriebsvorrichtung nach einem der Ansprüche 1 bis 8, **dadurch gekennzeichnet, daß** sich an den Außenring (7) an seinem der Umstülpung (6) abgewandten Rand ein etwa napfförmiger Anschlußübergang (15) Ring mit einem Abstand zu der Lagerhülse (4) einstückig anschließt, der sich in den Kupplungstutzen und/oder die Befestigungslasche (13) fortsetzt.

10. Antriebsvorrichtung nach einem der Ansprüche 1 bis 9, **dadurch gekennzeichnet, daß** der durch die Umstülpung (6) an der Lagerhülse (4) gebildete Außenring (7) als Einsteckteil zum Einstecken in eine Lageröffnung einer Karosserie dient und außenseitig insbesondere zylindrisch ist.

11. Antriebsvorrichtung nach einem der Ansprüche 1 bis 10, **dadurch gekennzeichnet, daß** der der Umstülpung (6) abgewandte, radial nach außen umgebogene Anschlußübergang (15) des Außenringes (7) einen axialen Anschlag (16) beim Einsetzen in eine Karosserieöffnung oder dergleichen bildet und die Einstecktisfe begrenzt.

12. Antriebsvorrichtung nach einem der Ansprüche 1 bis 11, **dadurch gekennzeichnet, daß** der an dem Außenring (7) einstückig angreifende Anschlag (16) über eine ringförmig angeordnete Biegung (17) um etwa 90° mit dem Außenring (7) einstückig verbunden ist und dieser Anschlag (16) seinerseits über eine Biegung (18) um etwa 90° in den napfförmigen Anschlußübergang (15) zur Halterung des Kupplungstutzens und/oder der Befestigungslasche (13) fortgesetzt ist.

## Claims

1. Drive device for windshield wipers, particularly for motor vehicle windshield wipers, having a drive motor, a transmission linkage which serves as lever gearing and a supporting tube (1) on both ends of which is supported, via a fixed push-in connection, a holding device (2) having a bearing sleeve (4) for a shaft or axle of a windshield wiper arm mounted at right angles to the longitudinal extent of the supporting tube (1), said holding device (2) having, on the one hand, the bearing sleeve (4) for receiving the shaft or axle and on the other hand a connecting piece (5) for connection to the supporting tube (1), the connecting piece (5) being constructed as a coupling member arranged with its central longitudinal axis (8) perpendicular to the direction and axis (9) of the bearing sleeve (4) for attachment and connection to the supporting tube (1), **characterised in that** the holding device (2) is a deep-drawn sheet metal part, **in that** the bearing sleeve (4) projects beyond the plane (E) of the deep-drawn sheet metal part on both sides and has at its end an upturned portion of the sheet metal from which it is made, in the sense that the end region of the bearing sleeve (4) is surrounded on the outside by a sleeve-shaped outer ring (7) integrally connected thereto and the transition from the bearing sleeve (4) to this outer ring (7) is an approximately 180° bend in longitudinal section and **in that** the connecting piece (5) is integrally connected to the outer ring (7) formed by the upturned portion (6).

2. Drive device according to claim 1, **characterised in that** the outer ring (7) connected to the bearing sleeve (4) via the upturned portion (6) has an axial extension through which the connecting piece (5) in the form of a coupling member is arranged to project substantially in the central part of the bearing sleeve (4) transversely to the latter.

3. Drive device according to claim 1 or 2, **characterised in that** the connecting piece (5) in the form of a coupling member is bent out of at least one sheet metal tongue (10), more particularly two half-shells, preferably identical in size, which are bent with their ends facing each other in the position of use, while at the end of the bent sheet metal tongue(s) (10) a slot (11) is left which extends substantially parallel to the central axis (8) of the coupling member.

4. Drive device according to claim 3, **characterised in that** the open slot (11) on the coupling member extends, in particular, axially parallel on the side of the coupling member remote from the upturned portion (6) and preferably on insertion into the supporting tube (1) accommodates a weld seam located inside this supporting tube (1).

5. Drive device according to one of claims 1 to 4, **characterised in that** the sheet metal tongues (10) which form the connecting piece (5) extend as U-shaped legs (12) in the region of the bearing sleeve, which are connected to the upturned portion (6) or to the outer ring (7), on the one hand, and, in particular, extend past the bearing sleeve (4) at a spacing from the outside thereof, on the other hand, and form a point of attachment or have an integral fixing tab (13) between them.

6. Drive device according to one of claims 1 to 5, **characterised in that** the U-shaped legs surrounding the fixing tab (13) merge into one and are joined together at their ends.

7. Drive device according to one of claims 1 to 6, **characterised in that** the upturned portion (6) is formed with a narrow bending radius such that the outer ring (7) located on the outside of the bearing sleeve (4) is immediately adjacent to or only slightly spaced from the bearing sleeve (4).

8. Drive device according to one of claims 1 to 7, **characterised in that** the outer ring (7) touches the bearing sleeve (4) at least at its end region remote from the upturned portion (6) and is optionally firmly attached to the bearing sleeve (4) at this point and/or has at least one bead directed towards the bearing sleeve (4) and abutting thereon.

9. Drive device according to one of claims 1 to 8, **characterised in that** a substantially dish-shaped transitional connecting portion (15) ring integrally adjoins the outer ring (7) at its edge remote from the upturned portion (6) at a spacing from the bearing sleeve (4), said portion (15) extending into the coupling member and/or the fixing tab (13).

10. Drive device according to one of claims 1 to 9, **characterised in that** the outer ring (7) formed by the upturned portion (6) on the bearing sleeve (4) serves as an insertion part for insertion into a bearing opening in vehicle bodywork and is, in particular, cylindrical on the outside.

11. Drive device according to one of claims 1 to 10, **characterised in that** the radially outwardly bent transitional connecting portion (15) of the outer ring (7), remote from the upturned portion (6), forms an axial stop (16) when inserted into an opening in bodywork or the like and delimits the depth of insertion.

12. Drive device according to one of claims 1 to 11, **characterised in that** the stop (16) integrally acting on the outer ring (7) is integrally connected to the outer ring (7) via an annularly disposed, roughly 90° bend (17) and this stop (16) in turn extends via a roughly 90° bend (18) into the dish-shaped transitional connecting portion (15) in order to secure the coupling member and/or the fixing tab (13).

## Revendications

1. Dispositif d'entraînement pour essuie-glace, notamment pour essuie-glace de véhicule à moteur, comprenant un moteur d'entraînement, une tringlerie de transmission servant de mécanisme à leviers et un tube de support (1) qui porte à ses deux extrémités, par le biais d'un assemblage par emboîtement fixe (3), un dispositif de fixation (2) avec douille de support (4) pour un arbre ou un axe d'un bras d'essuie-glace qui est orienté transversalement par rapport à l'étendue longitudinale du tube de support (1), sachant que le dispositif de fixation (2) présente, d'une part, la douille de support (4) destinée à recevoir l'arbre ou l'axe et, d'autre part, une pièce de raccordement (5) pour l'assembler au tube de support (1), sachant que la pièce de raccordement (5) est réalisée en tant que manchon d'accouplement dont l'axe médian (8) est disposé transversalement par rapport à l'étendue et à l'axe (9) de la douille de support (4), afin de la fixer en l'emboîtant dans le tube de support (1), **caractérisé en ce que** le dispositif de fixation (2) est une pièce en tôle emboutie, **en ce que** la douille de support (4) dépasse de part et d'autre du plan (E) de la pièce en tôle emboutie et présente à une extrémité un rebord (6) de la tôle qui la constitue, de manière à ce que la zone d'extrémité de la douille de support (4) soit entourée à l'extérieur par une bague externe en forme de douille (7) formant un seul tenant avec elle et de manière à ce que la transition entre la douille de support (4) et cette bague externe (7) soit un pli à environ 180° vu en coupe longitudinale, et **en ce que** la pièce de raccordement (5) forme un seul tenant avec la bague externe (7) constituée par le rebord (6).

2. Dispositif d'entraînement selon la revendication 1, **caractérisé en ce que** la bague externe (7) reliée à la douille de support (4) par le biais du rebord (6) présente une étendue axiale par laquelle la pièce de raccordement (5) réalisée en tant que manchon d'accouplement est disposée approximativement dans la partie centrale de la douille de support (4) en en faisant saillie transversalement.

3. Dispositif d'entraînement selon la revendication 1 ou 2, **caractérisé en ce que** la pièce de raccordement (5) réalisée en tant que manchon d'accouplement est cintrée à partir d'au moins une languette en tôle (10) et est notamment composée de deux demi-coupes cintrées, de préférence de même taille, dont les extrémités sont tournées l'une vers l'autre en position d'utilisation, sachant qu'à l'extrémité de la (des) languette(s) en tôle (10), une fente (11) s'étendant approximativement parallèlement à l'axe médian (8) du manchon d'accouplement est laissée ouverte.

4. Dispositif d'entraînement selon la revendication 3, **caractérisé en ce que** la fente ouverte (11) sur le manchon d'accouplement s'étend notamment parallèlement à l'axe sur le côté du rebord (6) qui est éloigné du manchon d'accouplement et reçoit, de préférence lors de l'emboîtement dans le tube de support (1), un cordon de soudure interne se trouvant à l'intérieur de ce tube de support (1).

5. Dispositif d'entraînement selon l'une des revendications 1 à 4, **caractérisé en ce que** les languettes en tôle (10) formant la pièce de raccordement (5) se prolongent dans la zone du coussinet sous forme d'ailes en U (12) qui, d'une part, sont reliées au rebord (6) ou à la bague externe (7) et, d'autre part, contournent la douille de support (4) par l'extérieur sans la toucher et constituent un point de fixation ou présentent entre elles une bride de fixation (13) solidaire.

6. Dispositif d'entraînement selon l'une des revendications 1 à 5, **caractérisé en ce que** les ailes en U (12) entourant la bride de fixation (13) se rejoignent à leur extrémité et sont reliées entre elles d'un seul tenant.

7. Dispositif d'entraînement selon l'une des revendications 1 à 6, **caractérisé en ce que** le rebord (6) est formé avec un rayon de courbure si étroit que la bague externe (7) se trouvant sur l'extérieur de la douille de support (4) n'est pas ou seulement faiblement distante de la douille de support (4).

8. Dispositif d'entraînement selon l'une des revendications 1 à 7, **caractérisé en ce que** la bague externe (7) touche la douille de support (4) au moins par sa zone d'extrémité opposée au rebord (6), est éventuellement reliée fixement à la douille de support (4) à cet endroit et/ou présente au moins une moulure dirigée vers la douille de support (4) et appliquée contre celle-ci.

9. Dispositif d'entraînement selon l'une des revendications 1 à 8, **caractérisé en ce qu'**une bague de jonction en forme de cuvette (15) fait suite d'une seule pièce, en étant distante par rapport à la douille de support (4), au bord de la bague externe (7) qui est tourné vers le rebord (6) et est prolongée par le manchon d'accouplement et/ou par la bride de fixation (13).

10. Dispositif d'entraînement selon l'une des revendications 1 à 9, **caractérisé en ce que** la bague externe (7) formée par le rebord (6) sur la douille de support (4) sert d'élément à emboîter dans un orifice de réception d'une carrosserie et est notamment cylindrique à l'extérieur.

11. Dispositif d'entraînement selon l'une des revendications 1 à 10, **caractérisé en ce que** la zone de jonction (15) de la bague externe (7) qui est opposée au rebord (6) et qui est recourbée radialement vers l'extérieur forme une butée axiale (16) lors de l'introduction dans un orifice de carrosserie ou analogue et limite la profondeur d'emboîtement.

12. Dispositif d'entraînement selon l'une des revendications 1 à 11, **caractérisé en ce que** la butée (16) appliquée contre la bague externe (7) est reliée à la bague externe (7) en formant un seul tenant par le biais d'un pli annulaire (17) à environ 90°, et **en ce que** cette butée (16) devient, quant à elle, après un pli (18) à environ 90°, la zone de transition en forme de cuvette (15) destinée à maintenir le manchon d'accouplement et/ou la bride de fixation (13).
